**Europäisches Patentamt**

**European Patent Office**

**Office européen des brevets**

(19)

(11) Veröffentlichungsnummer: **0 308 699 B1**

# EUROPÄISCHE PATENTSCHRIFT

(12)

(45) Veröffentlichungstag der Patentschrift: **28.04.93**

(21) Anmeldenummer: **88114271.5**

(22) Anmeldetag: **01.09.88**

Die Akte enthält technische Angaben, die nach dem Eingang der Anmeldung eingereicht wurden und die nicht in dieser Patentschrift enthalten sind.

(51) Int. Cl.5: **C08K 13/02**, C08K 13/06, C08L 67/06, //(C08K13/02,3:22, 9:10,5:05,5:16),(C08K13/06, 3:22,3:32,5:05,5:16)

(54) **Flammwidrige ungesättigte Polyesterharze.**

(30) Priorität: **25.09.87 DE 3732377**

(43) Veröffentlichungstag der Anmeldung:
**29.03.89 Patentblatt 89/13**

(45) Bekanntmachung des Hinweises auf die
Patenterteilung:
**28.04.93 Patentblatt 93/17**

(84) Benannte Vertragsstaaten:
**AT BE CH DE ES FR GB IT LI LU NL SE**

(56) Entgegenhaltungen:
**EP-A- 0 178 529**
**DE-A- 2 800 891**

**CHEMICAL ABSTRACTS, Band 99, Nr. 22, 28. November 1983, Seite 96, Zusammenfassung Nr. 177602t, Columbus, Ohio, US; & JP-A-58 53 964 (DAINIPPON TORYO CO. LTD) 30-03-1983**

**CHEMICAL ABSTRACTS, Band 91, Nr. 36, 9. Juli 1979, Seite 37, Zusammenfassung Nr. 5950y, Columbus, Ohio, US; & JP-A-79 22 450**

**(SUMITOMO CHEMICAL CO. LTD) 20-02-1979**

**J. Troitzsch, "Brandverhalten von Kunststoffen", S. 64, C. Hanser Verlag München Wien (1982)**

(73) Patentinhaber: **HOECHST AKTIENGESELL-SCHAFT**
**Postfach 80 03 20**
**W-6230 Frankfurt am Main 80(DE)**

(72) Erfinder: **Staendeke, Horst, Dr.**
**Alte Honrather Strasse 22**
**W-5204 Lohmar(DE)**
Erfinder: **Scharf, Daniel, Dr.**
**120 Adirondack Drive**
**East Greenwich Rhode Island 02818(US)**

EP 0 308 699 B1

EP 0 308 699 B1

**Beschreibung**

Die Erfindung betrifft flammwidrige ungesättigte Polyesterharze.

Es ist bekannt, ungesättigte Polyesterharze dadurch flammwidrig einzustellen, daß entweder anorganische Flammschutzmittel wie Aluminiumhydroxid oder organische Flammschutzmittel wie Chlorparaffine oder halogenierte Biphenyle zugesetzt werden oder daß eine chemische Modifizierung der Säure- oder Alkoholkomponente oder des ungesättigten Monomers erfolgt, wobei häufig eine Halogenierung durchgeführt wird. Bei halogenhaltigen ungesättigten Polyestern wird vielfach als Synergist zusätzlich Antimontrioxid eingesetzt (vergl. "Handbook of Plastics Flammability and Combustion Toxicology", Noyes Publications, Park Ridge, N.J., USA (1983)).

Aus der US-PS 3 810 862 ist bekannt, für die flammwidrige Ausrüstung von Polyolefinen Gemische von Ammoniumpolyphosphat, Melamin und Dipentaerythrit oder von Melaminpyrophosphat und Dipentaerythrit einzusetzen.

In der DE-OS 28 00 891 werden Flammschutzmittelsysteme auf der Basis von Ammoniumpolyphosphat, Melamin und Polyamid 6 und in der DE-OS 28 39 710 weitere solche Systeme auf der Basis von Ammoniumpolyphosphat, Melamin und Tris-2-hydroxyethyl-isocyanurat oder Ammoniumpolyphosphat, Pentaerythrit bzw. Tripentaerythrit und Tris-2-hydroxyethyl-isocyanurat sowie Ammoniumpolyphosphat, Cyanursäure und Tris-2-hydroxyethyl-isocyanurat beschrieben.

Schließlich sind aus der EP-PS 204 027 Gemische von Ammoniumpolyphosphat, Melamin-Cyanurat und Hydroxyalkylestern der Isocyanursäure als Flammschutzmittel für Polyolefine bekannt.

Obwohl Aluminiumhydroxid allein und Kombinationen von Ammoniumpolyphosphat mit synergistisch wirkenden Verbindungen keine wirksamen Flammschutzmittel für ungesättigte Polyester darstellen, wurde nun überraschend gefunden, daß sich die Kombination von Aluminiumhydroxid und Ammoniumpolyphosphat mit einer Reihe synergistisch wirkender Substanzen als sehr effektives Flammschutzsystem für ungesättigte Polyester erweist.

Unter ungesättigten Polyesterharzen (UP-Harzen) sollen die Produkte verstanden werden, die durch Kondensationsreaktionen aus gesättigten und ungesättigten Dicarbonsäuren oder deren Anhydriden und Diolen hergestellt werden können. Die wichtigsten Dicarbonsäuren für diese Verwendung sind Maleinsäure, meist in Form des Anhydrids, und Fumarsäure. Aus der Reihe der Diole wird bevorzugt Propandiol-1,2 eingesetzt. Das am häufigsten verwendete reaktionsfähige Monomer stellt das Styrol dar, das beliebig mit Polyesterharzen mischbar ist und sich gut copolymerisieren läßt. Der Styrol-Anteil in ungesättigten Polyesterharzen liegt üblicherweise zwischen 30 und 40 Masse% (vergl. "Ullmanns Encyklopädie der technischen Chemie", Band 19, 1980, Seiten 79 bis 88).

Im einzelnen betrifft die Erfindung flammwidrige ungesättigte Polyesterharze, welche dadurch gekennzeichnet sind, daß sie als Flammschutzsystem eine Phosphor-Stickstoff-Komponente, Aluminiumhydroxid und mindestens eine synergistisch wirkende Komponente aus der Substanzreihe organische Stickstoffverbindungen enthalten.

Darüberhinaus können die flammwidrigen ungesättigten Polyesterharze gemäß der Erfindung bevorzugt und unabhängig voneinander dadurch gekennzeichnet sein, daß

a) sie als Phosphor-Stickstoff-Komponente 5 bis 45 Masseteile Ammoniumpolyphosphat je 100 Masseteile Polymer enthalten;

b) das Ammoniumpolyphosphat 0,5 bis 25 Masse% eines wasserunlöslichen, gegebenenfalls gehärteten Kunstharzes, welches die einzelnen Ammoniumpolyphosphatteilchen umhüllt, enthält;

c) das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält;

d) das Ammoniumpolyphosphat 0,5 bis 25 Masse% eines Reaktionsproduktes aus einem Polyisocyanat und einer Polyhydroxyverbindung, wobei das gebildete Polyurethan die einzelnen Ammoniumpolyphosphatteilchen umhüllt, enthält;

e) das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält;

f) das Ammoniumpolyphosphat 0,5 bis 25 Masse% eines Reaktionsproduktes aus einem Polyisocyanat und Wasser, wobei der gebildete Polyharnstoff die einzelnen Ammoniumpolyphosphatteilchen umhüllt, enthält;

g) das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält;

2

h) das Ammoniumpolyphosphat 0,5 bis 25 Masse% eines gehärteten Epoxidharzes, wobei das Epoxidharz die einzelnen Ammoniumpolyphosphatteilchen umhüllt, enthält;

i) als organische Stickstoffverbindung Melamin und/oder Melaminderivate eingesetzt sind;

j) als organische Stickstoffverbindung Cyanursäure bzw. Isocyanursäure und/oder deren Derivate eingesetzt sind;

k) als organische Stickstoffverbindung ein Kondensationsprodukt von Ethylenharnstoff und Formaldehyd enthalten ist;

l) 1 bis 25 Masseteile der synergistisch wirkenden Komponente je 100 Masseteile Polymer enthalten sind;

m) 50 bis 175 Masseteile Aluminiumhydroxid je 100 Masseteile Polymer enthalten sind;

n) sie Ammoniumpolyphosphat und die synergistisch wirkende Komponente im Masseverhältnis von 1 : 1 bis 10 : 1 enthalten;

o) sie Aluminiumhydroxid und die Kombination aus Ammoniumpolyphosphat und der synergistisch wirkenden Komponente im Masseverhältnis 1 : 1 bis 15 : 1 enthalten;

p) sie Duroplaste sind;

q) sie ungesättigte Polyesterharze sind;

r) sie durch Glasfasern verstärkt sind.

Weiterhin betrifft die Erfindung ein Verfahren zur Herstellung flammwidriger Formkörper, welches dadurch gekennzeichnet ist, daß man ein UP-Harz mit einem Flammschutzsystem aus einer Phosphor-Stickstoff-Komponente, Aluminiumhydroxid und mindestens einer synergistisch wirkenden Komponente aus der Substanzreihe organische Stickstoffverbindungen vermischt und die resultierende Mischung entweder bei Drucken von 3 bis 10 bar und Temperaturen von 20 bis 60°C kalt naßpreßt oder bei Drucken von 3 bis 10 bar und Temperaturen von 80 bis 150°C warm naßpreßt oder aus der resultierenden Mischung bei Drucken von 50 bis 150 bar und Temperaturen von 140 bis 160°C Kunstharzmatten fertigt.

Das Aluminiumhydroxid wird vorzugsweise in Form von Produkten eingesetzt, die in der EP-PS 11 667 beschrieben sind.

Als Ammoniumpolyphosphat wird vorzugsweise ein freifließendes, pulverförmiges, in Wasser schwer lösliches Ammoniumpolyphosphat der Formel $(NH_4PO_3)_n$ mit n = 20 bis 1000, insbesondere 500 bis 1000, eingesetzt. Es besitzt vorteilhafterweise eine Teilchengröße > 99 % < 45 $\mu$m.

Die nachfolgenden Beispiele und Tabellen sollen die Erfindung näher erläutern, ohne daß diese jedoch auf den Gegenstand der Beispiele beschränkt ist. Die Teile-Angaben verstehen sich als Masseteile.

Vergleichsbespiel 1

1. Herstellung des Polyester/Flammschutzmittel-Gemischs

100 Teile ®Alpolit UP002 (Hoechst AG, Frankfurt/Main)

- es handelt sich um ein in Styrol gelöstes, niedrigviskoses und hochreaktives ungesättigtes Polyesterharz -

100 Teile ®Aryral 2 (VAW; Vereinigte Aluminium Werke AG, Bonn)

- es handelt sich um ein Aluminiumhydroxid, das aus dem BAYER-Prozeß stammt und nach dem Verfahren gemäß EP-PS 11 667 modifiziert wurde -

0,3 Teile Kobalt-Beschleuniger NL 49 P (Akzo Chemie GmbH, Düren)

- es handelt sich um eine Kobaltoktoat-Lösung in Dibutylphthalat mit einem Kobaltgehalt von 1 Masse% -

werden in einem geeigneten Gefäß mit einer Dissolverscheibe gemischt. Nach Zugabe von

2,0 Teilen ®Butanox M 50 (Akzo Chemie GmbH, Düren)

- es handelt sich um Methylethylketonperoxid, das mit Dimethylphthalat phlegmatisiert ist; es liegt als klare, farblose Flüssigkeit mit einem Aktiv-Sauerstoffgehalt von mind. 9 Masse% vor -

wird nochmals gemischt.

2. Herstellung der UP-Harzlaminate

Etwa die Hälfte des Polyester/Flammschutzmittel-Gemischs wird auf der Trennfolie [®Hostaphan RN 100/0,1 mm dick (Hoechst AG, Frankfurt/Main)] gleichmäßig verteilt. Dann wird eine passend zugeschnittene, styrolunlöslich gebunde Textilglasmatte vom Flächengewicht 450 g/m² eingelegt. Mit einem Lammfellroller wird dann die 2. Hälfte des Polyester/Flammschutzmittel-Gemischs auf der Glasmatte gleichmäßig verteilt und gleichzeitig die eingeschlossene Luft entfernt. Das Laminat wird anschließend mit einer weiteren Trennfolie abgedeckt.

3. Herstellung der Prüfplatte

Aus dem Laminat wird dann in einer warmwasserbeheizten BECKER-VAN HÜLLEN-Presse bei einer Temperatur von 50°C und einem Druck von 10 bar in einem Zeitraum von etwa 1 Stunde eine Preßplatte von 1,6 mm Dicke hergestellt.

4. Brandprüfungen

4.1. Die Prüfung des Brandverhaltens wurde nach der Vorschrift von Underwriters Laboratories "Test for Flammability of Plastic Material - UL 94" in der Fassung vom 2.5.1975 an prüfkörpern von 127 mm Länge, 12,7 mm Breite und 1,6 mm Dicke vorgenommen.

4.2. Der Sauerstoffindex wurde in einer modifizierten Apparatur in Anlehnung an ASTM-D 2863-74 bestimmt.

Die Ergebnisse der Brandprüfung sind in Tabelle 1 aufgeführt.

Vergleichsbeispiele 2-35 und Beispiele 1-24

Die Herstellung und Prüfung der Testplatten erfolgte in der in Beispiel 1 beschriebenen Arbeitsweise. Die in Art und Gehalt an Flammschutzmittel vom Vergleichsbeispiel 1 abweichenden Angaben sind in den Tabellen 1 bis 12 in den Spalten 2 und 3 aufgeführt.

In den Vergleichsbeispiele 2-35 und Beispiele 1-24 wurden außerdem folgende Produkte eingesetzt:

®Exolit 422 (Hoechst AG, Frankfurt/Main)

- es handelt sich um ein feinkörniges, in Wasser schwer lösliches Ammoniumpolyphosphat der Formel $(NH_4 PO_3)_n$, wobei n = ca. 700; die Teilchengröße des Ammoniumpolyphosphats beträgt > 99 % < 45 $\mu$m -

®Exolit 462 (Hoechst AG, Frankfurt/Main)

- es handelt sich um ein mikroverkapseltes Ammoniumpolyphosphat, das nach dem Verfahren der EP-B-0 180 795 hergestellt wurde und etwa 10 Masse% Kapselmaterial, bestehend aus einem gehärteten Melamin-Formaldehyd-Harz, enthält -

®Exolit 455 (Hoechst AG, Frankfurt/Main)

- es handelt sich um ein mikroverkapseltes Ammoniumpolyphosphat, das nach dem Verfahren der US-PS 4 514 328 hergestellt wurde und etwa 10 Masse% Kapselmaterial, bestehend aus einem Epoxidharz, enthält -

®Exolit 470 (Hoechst AG, Frankfurt/Main)

- es handelt sich um ein mikroverkapseltes Ammoniumpolyphosphat, das nach dem Verfahren der DE-OS 35 26 006 hergestellt wurde und etwa 10 % Kapselmaterial, bestehend aus dem Reaktionsprodukt aus einem Polyisocyanat mit einem Carbodiimidisierungskatalysator, enthält -

Spinflam MF 80 (Montefluos, Mailand)

- es handelt sich um ein Kondensationsprodukt aus Ethylenharnstoff und Formaldehyd mit einem Stickstoffgehalt von 28 %.

Aus den Tabellen 1 bis 5 kann entnommen werden, daß weder Aluminiumhydroxid noch Kombinationen von Ammoniumpolyphosphat mit synergistisch wirkenden Komponenten in der Lage sind, bei ungesättigten Polyestern eine Einstufung in die UL 94-Klassen V-2 bis V-0 zu erreichen.

Dagegen zeigen die Tabellen 6 bis 12, daß überraschenderweise bereits geringe Mengen der verschiedenen Ammoniumpolyphosphate zusammen mit den synergistisch wirkenden Komponenten in Kombination mit Aluminiumhydroxid geeignet sind, die UL 94-Klassen V-1 und V-0 sicherzustellen.

TABELLE 1 (Vergleichsbeispiele)

Brandtest gemäß UL 94-Vertikaltest [1]

Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge T/100T UP [2] | Gesamtmenge T/100T UP [2] | | |
| 1 | Apyral 2 | 100 | 100 | n.k. [3] | 0,30 |
| 2 | Apyral 2 | 125 | 125 | n.k. | 0,32 |
| 3 | Apyral 2 | 150 | 150 | n.k. | 0,33 |
| 4 | Apyral 2 | 175 | 175 | n.k. | 0,36 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] n.k. = nicht klassifiziert als V-0, V-1 oder V-2

TABELLE 2 (Vergleichsbeispiele) (Teil 1)

Brandtest gemäß UL 94-Vertikaltest [1]
Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge T/100T UP [2] | Gesamtmenge T/100T UP [2] | | |
| 5 | Exolit 422 | 15 | 25 | n.k. [3] | 0,24 |
| | Melamin | 5 | | | |
| | Pentaerythrit | 5 | | | |
| 6 | Exolit 462 | 15 | 25 | n.k. | 0,23 |
| | Melamin | 5 | | | |
| | Pentaerythrit | 5 | | | |
| 7 | Exolit 422 | 22,5 | 37,5 | n.k. | 0,25 |
| | Melamin | 7,5 | | | |
| | Pentaerythrit | 7,5 | | | |
| 8 | Exolit 462 | 22,5 | 37,5 | n.k. | 0,25 |
| | Melamin | 7,5 | | | |
| | Pentaerythrit | 7,5 | | | |
| 9 | Exolit 422 | 30 | 50 | n.k. | 0,26 |
| | Melamin | 10 | | | |
| | Pentaerythrit | 10 | | | |
| 10 | Exolit 462 | 30 | 50 | n.k. | 0,26 |
| | Melamin | 10 | | | |
| | Pentaerythrit | 10 | | | |

[1] Underwriters Laboratories "Test for Flammability of Plastic Material-UL 94"
Probekörper: 127 mm Länge, 12,7 mm Breite und 1,6 mm Dicke

[2] UP = (R) Alpolit UP 002; T = Teile

[3] n.k. = nicht klassifiziert als V-0, V-1 oder V-2

EP 0 308 699 B1

TABELLE 2 (Vergleichsbeispiele) (Teil 2)

Brandtest gemäß UL 94-Vertikaltest [1]
Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge T/100T UP [2] | Gesamtmenge T/100T UP [2] | | |
| 11 | Exolit 422 Melamin Pentaerythrit | · 45 15 15 | 75 | V-0 | 0,29 |
| 12 | Exolit 462 Melamin Pentaerythrit | 45 15 15 | 75 | V-0 | 0,35 |

[1] Underwriters Laboratories "Test for Flammability of Plastic Material-UL 94"
Probekörper: 127 Lände, 12,7 mm Breite und 1,6 mm Dicke

[2] UP = ® Alpolit UP 002; T = Teile

EP 0 308 699 B1

TABELLE 3 (Vergleichsbeispiele) (Teil 1)

Brandtest gemäß UL 94-Vertikaltest [1]

Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge T/100T UP [2] | Gesamtmenge T/100/ UP [2] | | |
| 13 | Exolit 422 Spinflam MF 80 | 25 25 | 50 | n.k. [3] | 0,25 |
| 14 | Exolit 422 Spinflam MF 80 | 37,5 12,5 | 50 | n.k. | 0,25 |
| 15 | Exolit 462 Spinflam MF 80 | 25 25 | 50 | n.k. | 0,24 |
| 16 | Exolit 462 Spinflam MF 80 | 37,5 12,5 | 50 | n.k. | 0,25 |

[1] Underwriters Laboratories "Test for Flammability of Plastic Material-UL 94"
Probekörper : 127 mm Länge, 12,7 mm Breite und 1,6 mm Dicke

[2] UP = ® Alpolit UP 002; T = Teile

[3] n.k. = nicht klassifiziert als V-0, V-1 oder V-2

TABELLE 3 (Vergleichsbeispiele) (Teil 2)

Brandtest gemäß UL 94-Vertikaltest [1]

Sauerstoffindex gemäß ASTM-D 2863-74

| Vergleichsbeispiele | Art | Flammschutzsystem Einzelmenge T/100T UP [2] | Gesamtmenge T/100/ UP [2] | UL 94- Vertikal- test | Sauerstoff- Index |
|---|---|---|---|---|---|
| 17 | Exolit 422 Spinflam MF 80 | 50 25 | 75 | n.k. [3] | 0,29 |
| 18 | Exolit 422 Spinflam MF 80 | 60 15 | 75 | n.k. | 0,30 |
| 19 | Exolit 462 Spinflam MF 80 | 50 25 | 75 | n.k. | 0,31 |
| 20 | Exolit 462 Spinflam MF 80 | 60 15 | 75 | n.k. | 0,33 |

[1] Underwriters Laboratories "Test for Flammability of Plastic Material-UL 94"
Probekörper : 127 mm Länge, 12,7 mm Breite und 1,6 mm Dicke

[2] UP = ® Alpolit UP 002; T = Teile

[3] n.k. = nicht klassifiziert als V-0, V-1 oder V-2

EP 0 308 699 B1

TABELLE 4 (<u>Vergleichsbeispiele</u>) (Teil 1)

Brandtest gemäß UL 94-Vertikaltest [1]

Sauerstoffindex gemäß ASTM-D 2863-74

| Vergleichsbeispiele | Art | Flammschutzsystem | | UL 94-Vertikaltest | Sauerstoff-Index |
| | | Einzelmenge[2] T/100T UP | Gesamtmenge[2] T/100/ UP | | |
| --- | --- | --- | --- | --- | --- |
| 21 | Exolit 422<br>THEIC [4] | 25<br>25 | 50 | n.k. [3] | 0,25 |
| 22 | Exolit 422<br>THEIC | 37,5<br>12,5 | 50 | n.k. | 0,27 |
| 23 | Exolit 462<br>THEIC | 25<br>25 | 50 | n.k. | 0,25 |
| 24 | Exolit 455<br>THEIC | 25<br>25 | 50 | n.k. | 0,26 |

[1] Underwriters Laboratories "Test for Flammability of Plastic Material-UL 94"
Probekörper : 127 mm Länge, 12,7 mm Breite und 1,6 mm Dicke

[2] UP = (R) Alpolit UP 002; T = Teile

[3] n.k. = nicht klassifiziert als V-0, V-1 oder V-2

[4] THEIC = Tris-(2-hydroxyethyl)-isocyanurat

EP 0 308 699 B1

TABELLE 4 (<u>Vergleichs</u>beispiele) (Teil 2)

Brandtest gemäß UL 94-Vertikaltest [1]

Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge [2] T/100T UP | Gesamtmenge [2] T/100/ UP | | |
| 25 | Exolit 455 THEIC [4] | 37,5 12,5 | 50 | n.k. [3] | 0,27 |
| 26 | Exolit 470 THEIC | 25 25 | 50 | n.k. | 0,28 |
| 27 | Exolit 470 THEIC | 37,5 12,5 | 50 | n.k. | 0,28 |

[1] Underwriters Laboratories "Test for Flammability of Plastic Material-UL 94" Probekörper : 127 mm Länge, 12,7 mm Breite und 1,6 mm Dicke

[2] UP = ⓇAlpolit UP 002; T = Teile

[3] n.k. = nicht klassifiziert als V-0, V-1 oder V-2

[4] THEIC = Tris-(2-hydroxyethyl)-isocyanurat

EP 0 308 699 B1

TABELLE 5 (Vergleichsbeispiele) (Teil 1)

Brandtest gemäß UL 94-Vertikaltest [1]

Sauerstoffindex gemäß ASTM-D 2863-74

| Vergleichsbeispiele | Art | Flammschutzsystem | | UL 94-Vertikaltest | Sauerstoff-Index |
| | | Einzelmenge T/100T UP [2] | Gesamtmenge T/100/ UP [2] | | |
|---|---|---|---|---|---|
| 28 | Exolit 422 MCY [5] | 37,5 12,5 | 50 | n.k. [3] | 0,24 |
| 29 | Exolit 422 DIPIT [6] | 37,5 12,5 | 50 | n.k. | 0,26 |
| 30 | Exolit 422 THEIC [4] DIPIT | 30 10 10 | 50 | n.k. | 0,26 |
| 31 | Exolit 422 MCY DIPIT | 30 10 10 | 50 | n.k. | 0,26 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] n.k. = nicht klassifiziert als V-0, V-1 oder V-2

[4] THEIC = Tris-(2-hydroxyethyl)-isocyanurat       [5] MCY = Melamincyanurat

[6] DIPIT = Dipentaerythrit

TABELLE 5 (<u>Vergleichs</u>beispiele) (Teil 2)

Brandtest gemäß UL 94-Vertikaltest [1]

Sauerstoffindex gemäß ASTM-D 2863-74

| Vergleichsbeispiele | Art | Flammschutzsystem | | UL 94-Vertikal-test | Sauerstoff-Index |
|---|---|---|---|---|---|
| | | Einzelmenge T/100T UP [2] | Gesamtmenge T/100/ UP [2] | | |
| 32 | Exolit 422<br>MCY [5]<br>THEIC [4] | 30<br>10<br>10 | 50 | n.k. [3] | 0,25 |
| 33 | Exolit 462<br>MCY<br>THEIC | 30<br>10<br>10 | 50 | n.k. | 0,26 |
| 34 | Exolit 455<br>MCY<br>THEIC | 30<br>10<br>10 | 50 | n.k. | 0,27 |
| 35 | Exolit 470<br>MCY<br>THEIC | 30<br>10<br>10 | 50 | n.k. | 0,28 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] n.k. = nicht klassifiziert als V-0, V-1 oder V-2

[4] THEIC = Tris-(2-hydroxyethyl)-isocyanurat       [5] MCY = Melamincyanurat

[6] DIPIT = Dipentaerythrit

EP 0 308 699 B1

TABELLE 6 (Erfindungsgemäße Beispiele (Teil 1)

Brandtest gemäß UL 94-Vertikaltest [1]

Sauerstoffindex gemäß ASTM-D 2863-74

| Beispiel | Art | Flammschutzsystem | | UL 94-Vertikal-test | Sauerstoff-Index |
|---|---|---|---|---|---|
| | | Einzelmenge[2] T/100T UP | Gesamtmenge[2] T/100/ UP | | |
| 1 | Exolit 422<br>Melamin<br>Pentaerythrit<br>Apyral 2 | 30<br>10<br>10<br>50 | 100 | V-1 | 0,36 |
| 2 | Explit 422<br>Melamin<br>Pentaerythrit<br>Apyral 2 | 36<br>7<br>7<br>50 | 100 | V-0 | 0,37 |
| 3 | Exolit 422<br>Melamin<br>Pentaerythrit<br>Apyral 2 | 15<br>5<br>5<br>125 | 150 | V-1 | 0,39 |

[1] Underwriters Laboratories "Test for Flammability of Plastic Material-UL 94"
Probekörper: 127 Länge, 12,7 mm Breite und 1,6 mm Dicke

[2] UP = ® Alpolit UP 002; T = Teile

EP 0 308 699 B1

TABELLE 6 (<u>Erfindungsgemäße</u> Beispiele) (Teil 2)

Brandtest gemäß UL 94-Vertikaltest [1]

Sauerstoffindex gemäß ASTM-D 2863-74

| Beispiel | Art | Flammschutzsystem | | UL 94-Vertikal-test | Sauerstoff-Index |
|---|---|---|---|---|---|
| | | Einzelmenge T/100T UP [2] | Gesamtmenge T/100/ UP [2] | | |
| 4 | Exolit 462 Melamin Pentaerythrit Apyral 2 | 15 5 5 125 | 150 | V-1 | 0,40 |
| 5 | Exolit 455 Melamin Pentaerythrit Apyral 2 | 15 5 5 125 | 150 | V-0 | 0,39 |
| 6 | Exolit 470 Melamin Pentaerythrit Apyral 2 | 15 5 5 125 | 150 | V-1 | 0,39 |

[1] Underwriters Laboratories "Test for Flammability of Plastic Material-UL 94"
Probekörper: 127 Länge, 12,7 mm Breite und 1,6 mm Dicke

[2] UP = ® Alpolit UP 002; T = Teile

EP 0 308 699 B1

TABELLE 7 (Erfindungsgemäße Beispiele)

Brandtest gemäß UL 94-Vertikaltest [1]

Sauerstoffindex gemäß ASTM-D 2863-74

| Beispiel | Art | Flammschutzsystem Einzelmenge T/100T UP [2] | Gesamtmenge T/100/ UP [2] | UL 94-Vertikal-test | Sauerstoff-Index |
|---|---|---|---|---|---|
| 7 | Exolit 462 MF 80 [3] Apyral 2 | 37,5 12,5 50 | 100 | V-1 | 0,30 |
| 8 | Exolit 462 MF 80 Apyral 2 | 37,5 12,5 100 | 150 | V-0 | 0,38 |
| 9 | Exolit 455 MF 80 Apyral 2 | 20 5 150 | 175 | V-0 | 0,45 |
| 10 | Exolit 455 MF 80 Apyral 2 | 16 4 150 | 170 | V-0 | 0,43 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] MF 80 = ® Spinflam MF 80

EP 0 308 699 B1

TABELLE 8 (<u>Erfindungsgemäße</u> Beispiele)

Brandtest gemäß UL 94-Vertikaltest [1]

Sauerstoffindex gemäß ASTM-D 2863-74

| Beispiel | Art | Flammschutzsystem Einzelmenge T/100T UP [2] | Gesamtmenge T/100/ UP [2] | UL 94-Vertikal-test | Sauerstoff-Index |
|---|---|---|---|---|---|
| 11 | Exolit 462 [3]<br>THEIC<br>Apyral 2 | 40<br>10<br>100 | 150 | V-0 | 0,38 |
| 12 | Exolit 462<br>THEIC<br>Apyral 2 | 20<br>5<br>125 | 150 | V-0 | 0,36 |
| 13 | Exolit 462<br>THEIC<br>Apyral 2 | 12<br>3<br>150 | 165 | V-0 | 0,41 |
| 14 | Exolit 462<br>THEIC<br>Apyral 2 | 8<br>2<br>150 | 160 | V-1 | 0,39 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] THEIC = Tris-(2-hydroxyethyl)-isocyanurat

EP 0 308 699 B1

TABELLE 9 (Erfindungsgemäße Beispiele)

Brandtest gemäß UL 94-Vertikaltest [1]

Sauerstoffindex gemäß ASTM-D 2863-74

| Beispiel | Art | Flammschutzsystem | | UL 94-Vertikal-test | Sauerstoff-Index |
|---|---|---|---|---|---|
| | | Einzelmenge T/100T UP [2] | Gesamtmenge T/100/ UP [2] | | |
| 15 | Exolit 462 MCY [3] Apyral 2 | 20 5 150 | 175 | V-0 | 0,41 |
| 16 | Exolit 462 MCY Apyral 2 | 16 4 150 | 170 | V-0 | 0,37 |
| 17 | Exolit 462 MCY Apyral 2 | 12 3 150 | 165 | V-1 | 0,36 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] MCY = Melamincyanurat

EP 0 308 699 B1

TABELLE 10 (Vergleichsbeispiele)ıpiele)

Brandtest gemäß UL 94-Vertikaltest [1]

Sauerstoffindex gemäß ASTM-D 2863-74

| Beispiel | Art | Flammschutzsystem | | UL 94-Vertikal-test | Sauerstoff-Index |
| | | Einzelmenge T/100T UP [2] | Gesamtmenge T/100/ UP [2] | | |
|---|---|---|---|---|---|
| 36 | Exolit 470<br>DIPIT [3]<br>Apyral 2 | 20<br>5<br>150 | 175 | V-0 | 0,44 |
| 37 | Exolit 470<br>DIPIT<br>Apyral 2 | 16<br>4<br>150 | 170 | V-0 | 0,42 |
| 38 | Exolit 470<br>DIPIT<br>Apyral 2 | 12<br>3<br>150 | 165 | V-1 | 0,41 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] DIPIT = Dipentaerythrit

EP 0 308 699 B1

TABELLE 11 (Erfindungsgemäße Beispiele)

Brandtest gemäß UL 94-Vertikaltest [1]
Sauerstoffindex gemäß ASTM-D 2863-74

| Beispiel | Art | Flammschutzsystem | | UL 94-Vertikal-test | Sauerstoff-Index |
| | | Einzelmenge [2] T/100T UP | Gesamtmenge [2] T/100/ UP | | |
|---|---|---|---|---|---|
| 18 | Exolit 422 [3] THEIC [4] DIPIT Apyral 2 | 15 5 5 125 | 150 | V-0 | 0,38 |
| 19 | Exolit 470 THEIC DIPIT Apyral 2 | 15 5 5 125 | 150 | V-0 | 0,40 |
| 20 | Exolit 462 [5] MCY DIPIT Apyral 2 | 15 5 5 125 | 150 | V-0 | 0,37 |
| 21 | Exolit 470 MCY DIPIT Apyral 2 | 15 5 5 125 | 150 | V-0 | 0,38 |

[1] Underwriters Laboratories "Test for Flammability of Plastic Material-UL 94"
Probekörper: 127 mm Länge, 12,7 mm Breite und 1,6 mm Dicke

[2] UP = ® Alpolit UP 002; T = Teile

[3] THEIC = Tris-(2-hydroxyethyl)-isocyanurat

[4] DIPIT = Dipentaerythrit

[5] MCY = Melamincyanurat

TABELLE 12 (Erfindungsgemäße Beispiele)

Brandtest gemäß UL 94-Vertikaltest 1)
Sauerstoffindex gemäß ASTM-D 2863-74

| Beispiel | Art | Flammschutzsystem | | UL 94-Vertikal-test | Sauerstoff-Index |
|---|---|---|---|---|---|
| | | Einzelmenge 2) T/100T UP | Gesamtmenge 2) T/100/ UP | | |
| 22 | Exolit 462 | 30 | 150 | V-0 | 0,35 |
| | MCY 3) 4) | 10 | | | |
| | THEIC 4) | 10 | | | |
| | Apyral 2 | 100 | | | |
| 23 | Exolit 462 | 15 | 150 | V-0 | 0,37 |
| | MCY | 5 | | | |
| | THEIC | 5 | | | |
| | Apyral 2 | 125 | | | |
| 24 | Exolit 462 | 12 | 170 | V-0 | 0,40 |
| | MCY | 4 | | | |
| | THEIC | 4 | | | |
| | Apyral 2 | 150 | | | |

1) Underwriters Laboratories "Test for Flammability of Plastic Material-UL 94" Probekörper: 127 mm Länge, 12,7 mm Breite und 1,6 mm Dicke
2) UP = ®Alpolit UP 002; T = Teile
3) MCY = Melamincyanurat
4) THEIC = Tris-(2-hydroxyethyl)-isocyanurat

Beispiel 25

1. Ein Polyester-Flammschutzmittel-Gemisch wird analog Beispiel 3 in Verbindung mit Vergleichsbeispiel 1 (Punkt 1) hergestellt, wobei jedoch anstelle von 2,0 Teilen ®Butanox M 50 jetzt 2,0 Teile ®Trigonox 21 (Tertiärbutylperoktoat; farblose Flüssigkeit mit mindestens 7 Masse% Aktivsauerstoff; Handelsprodukt der Fa. Akzo Chemie GmbH, Düren) zugemischt werden.

2. Die Herstellung der UP-Harzlaminate erfolgt wie in Vergleichs Vergleichsbeispiel 1 (Punkt 2) angegeben.

3. Abweichend von Vergleichsbeispiel 1 (Punkt 3) erfoglt die Herstellung der Prüfplatte bei 120°C.

4. Ergebnisse der Brandprüfungen entsprechend Vergleichsbeispiel 1 (Punkt 4):
UL 94 - Vertikaltest: Klasse V-0
Sauerstoff-Index: 0,40

Beispiel 26

1. Herstellung der Harzmatte
100 Teile ®Alpolit UP 306 (Hoechst AG, Frankfurt/Main)
- es handelt sich um ein in Styrol gelöstes, hochreaktives ungesättigtes Polyesterharz -
15 Teile ®Exolit 422
5 Teile Melamin
5 Teile Pentaerythrit
125 Teile ®Apyral 4
- es handelt sich um ein Aluminiumhydroxid, das aus dem BAYER-Prozeß stammt und nach dem
Verfahren gemäß EP-PS 11 667 modifiziert wurde -
4 Teile Zinkstearat
wurden gemischt und in einer Anlage zur Harzmatten-Produktion (vergl. Firmenprospekt der HOECHST AG: "Kunstharze Hoechst, Anwendungstechnik Aktuell, ®Alpolit für Prepegs und Preßmassen"; September 1982) verarbeitet; wobei 75 Teile Textilglasschnitzel über das Schneidwerk zugeführt werden.
2. Herstellung der Prüfplatte
Aus der Harzmatte wird in einer dampfbeheizten BECKER-VAN HÜLLEN-PRESSE bei einer Temperatur von 150°C und einem Druck von 100 bar in einem Zeitraum von 2 Minuten eine Preßplatte von 1,6 mm Dicke hergestellt.
3. Ergebnisse der Brandprüfungen entsprechend Vergleichsbeispiel 1 (Punkt 4):
UL 94 - Vertikaltest: Klasse V-0
Sauerstoff-Index: 0,41

**Patentansprüche**
**Patentansprüche für folgende Vertragsstaaten : AT, BE, CH, DE, FR, GB, IT, LI, LU, NL, SE**

1. Flammwidrige ungesättigte Polyesterharze, dadurch gekennzeichnet, daß sie als Flammschutzsystem Ammoniumpolyphosphat, Aluminiumhydroxid sowie mindestens eine organische Stickstoffverbindung und/oder deren Derivate enthalten.

2. Flammwidrige ungesättigte Polyesterharze nach Anspruch 1, dadurch gekennzeichnet, daß sie 5 bis 45 Masseteile Ammoniumpolyphosphat je 100 Masseteile Polyesterharz enthalten.

3. Flammwidrige ungesättigte Polyesterharze nach Anspruch 1 oder 2, dadurch gekennzeichnet, daß das Ammoniumpolyphosphat 0,5 bis 25 Masse% eines wasserunlöslichen, gegebenenfalls gehärteten Kunstharzes, welches die einzelnen Ammoniumpolyphosphatteilchen umhüllt, enthält.

4. Flammwidrige ungesättigte Polyesterharze nach Anspruch 1 oder 2, dadurch gekennzeichnet, daß das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält.

5. Flammwidrige ungesättigte Polyesterharze nach Anspruch 1 oder 2, dadurch gekennzeichnet, daß das Ammoniumpolyphosphat 0,5 bis 25 Masse% eines Reaktionsproduktes aus einem Polyisocyanat und einer Polyhydroxyverbindung, wobei das gebildete Polyurethan die einzelnen Ammoniumpolyphosphatteilchen umhüllt, enthält.

6. Flammwidrige ungesättigte Polyesterharze nach Anspruch 1 oder 2, dadurch gekennzeichnet, daß das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält.

7. Flammwidrige ungesättigte Polyesterharze nach Anspruch 1 oder 2, dadurch gekennzeichnet, daß das Ammoniumpolyphosphat 0,5 bis 25 Masse% eines Reaktionsproduktes aus einem Polyisocyanat und

22

EP 0 308 699 B1

Wasser, wobei der gebildete Polyharnstoff die einzelnen Ammoniumpolyphosphatteilchen umhüllt, enthält.

8. Flammwidrige ungesättigte Polyesterharze nach Anspruch 1 oder 2, dadurch gekennzeichnet, daß das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält.

9. Flammwidrige ungesättigte Polyesterharze nach Anspruch 1 oder 2, dadurch gekennzeichnet, daß das Ammoniumpolyphosphat 0,5 bis 25 Masse% eines gehärteten Epoxidharzes, wobei das Epoxidharz die einzelnen Ammoniumpolyphosphatteilchen umhüllt, enthält.

10. Flammwidrige ungesättigte Polyesterharze nach mindestens einem der Ansprüche 1 bis 9, dadurch gekennzeichnet, daß sie 50 bis 175 Masseteile Aluminiumhydroxid je 100 Masseteile Polyesterharz enthalten.

11. Flammwidrige ungesättigte Polyesterharze nach mindestens einem der Ansprüche 1 bis 10, dadurch gekennzeichnet, daß als organische Stickstoffverbindung Melamin eingesetzt ist.

12. Flammwidrige ungesättigte Polyesterharze nach mindestens einem der Ansprüche 1 bis 10, dadurch gekennzeichnet, daß als organische Stickstoffverbindung Cyanursäure und/oder Isocyanursäure eingesetzt sind.

13. Flammwidrige ungesättigte Polyesterharze nach mindestens einem der Ansprüche 1 bis 10, dadurch gekennzeichnet, daß als organische Stickstoffverbindung ein Kondensationsprodukt von Ethylenharnstoff und Formaldehyd dient.

14. Flammwidrige ungesättigte Polyesterharze nach mindestens einem der Ansprüche 1 bis 13, dadurch gekennzeichnet, daß 1 bis 25 Masseteile der organischen Stickstoffverbindung je 100 Masseteile Polyesterharz enthalten sind.

15. Flammwidrige ungesättigte Polyesterharze nach mindestens einem der Ansprüche 1 bis 14, dadurch gekennzeichnet, daß sie Ammoniumpolyphosphat und die organische Stickstoffverbindung im Masseverhältnis von 1 : 1 bis 10 : 1 enthalten.

16. Flammwidrige ungesättigte Polyesterharze nach mindestens einem der Ansprüche 1 bis 15, dadurch gekennzeichnet, daß sie Aluminiumhydroxid und die Kombination aus Ammoniumpolyphosphat sowie der organischen Stickstoffverbindung und/oder deren Derivate im Masseverhältnis von 1 : 1 bis 15 : 1 enthalten.

17. Flammwidrige ungesättigte Polyesterharze nach mindestens einem der Ansprüche 1 bis 16, dadurch gekennzeichnet, daß sie durch Glasfasern verstärkt sind.

**Patentahsprüche für folgenden Vertragsstaat : ES**

1. Verfahren zur Herstellung flammwidriger ungesättigter Polyesterharze, dadurch gekennzeichnet, daß man in ungesättigte Polyesterharze Ammoniumpolyphosphat, Aluminiumhydroxid sowie mindestens eine organische Stickstoffverbindung und/oder deren Derivate als Flammschutzsystem einarbeitet.

2. Verfahren nach Anspruch 1, dadurch gekennzeichnet, daß die flammwidrigen ungesättigten Polyesterharze 5 bis 45 Masseteile Ammoniumpolyphosphat je 100 Masseteile Polyesterharz enthalten.

3. Verfahren nach Anspruch 1 oder 2, dadurch gekennzeichnet, daß das Ammoniumpolyphosphat 0,5 bis 25 Masse% eines wasserunlöslichen, gegebenenfalls gehärteten Kunstharzes, welches die einzelnen Ammoniumpolyphosphatteilchen umhüllt, enthält.

4. Verfahren nach Anspruch 1 oder 2, dadurch gekennzeichnet, daß das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält.

23

5. Verfahren nach Anspruch 1 oder 2, dadurch gekennzeichnet, daß das Ammoniumpolyphosphat 0,5 bis 25 Masse% eines Reaktionsproduktes aus einem Polyisocyanat und einer Polyhydroxyverbindung, wobei das gebildete Polyurethan die einzelnen Ammoniumpolyphosphatteilchen umhüllt, enthält.

6. Verfahren nach Anspruch 1 oder 2, dadurch gekennzeichnet, daß das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält.

7. Verfahren nach Anspruch 1 oder 2, dadurch gekennzeichnet, daß das Ammoniumpolyphosphat 0,5 bis 25 Masse% eines Reaktionsproduktes aus einem Polyisocyanat und Wasser, wobei der gebildete Polyharnstoff die einzelnen Ammoniumpolyphosphatteilchen umhüllt, enthält.

8. Verfahren nach Anspruch 1 oder 2, dadurch gekennzeichnet, daß das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält.

9. Verfahren nach Anspruch 1 oder 2, dadurch gekennzeichnet, daß das Ammoniumpolyphosphat 0,5 bis 25 Masse% eines gehärteten Epoxidharzes, wobei das Epoxidharz die einzelnen Ammoniumpolyphosphatteilchen umhüllt, enthält.

10. Verfahren nach mindestens einem der Ansprüche 1 bis 9, dadurch gekennzeichnet, daß die flammwidrigen ungesättigten Polyesterharze 50 bis 175 Masseteile Aluminiumhydroxid je 100 Masseteile Polyesterharz enthalten.

11. Verfahren nach mindestens einem der Ansprüche 1 bis 10, dadurch gekennzeichnet, daß als organische Stickstoffverbindung Melamin eingesetzt ist.

12. Verfahren nach mindestens einem der Ansprüche 1 bis 10, dadurch gekennzeichnet, daß als organische Stickstoffverbindung Cyanursäure und/oder Isocyanursäure eingesetzt sind.

13. Verfahren nach mindestens einem der Ansprüche 1 bis 10, dadurch gekennzeichnet, daß als organische Stickstoffverbindung ein Kondensationsprodukt von Ethylenharnstoff und Formaldehyd dient.

14. Verfahren nach mindestens einem der Ansprüche 1 bis 13, dadurch gekennzeichnet, daß die flammwidrigen ungesättigten Polyesterharze 1 bis 25 Masseteile der organischen Stickstoffverbindung je 100 Masseteile Polyesterharz enthalten.

15. Verfahren nach mindestens einem der Ansprüche 1 bis 14, dadurch gekennzeichnet, daß die flammwidrigen ungesättigten Polyesterharze Ammoniumpolyphosphat und die organische Stickstoffverbindung im Masseverhältnis von 1 : 1 bis 10 : 1 enthalten.

16. Verfahren nach mindestens einem der Ansprüche 1 bis 15, dadurch gekennzeichnet, daß die flammwidrigen ungesättigten Polyesterharze Aluminiumhydroxid und die Kombination aus Ammoniumpolyphosphat sowie der organischen Stickstoffverbindung im Masseverhältnis 1 : 1 bis 15 : 1 enthalten.

17. Verfahren nach mindestens einem der Ansprüche 1 bis 16, dadurch gekennzeichnet, daß die flammwidrigen ungesättigten Polyesterharze durch Glasfasern verstärkt sind.

**Claims**

**Claims for the following Contracting States : AT, BE, CH, DE, FR, GB, IT, LI, LU, NL, SE**

1. A flame-resistant unsaturated polyester resin which contains, as flameproofing system, ammonium polyphosphate, aluminum hydroxide and at least one organonitrogen compound and/or a derivative thereof.

2. A flame-resistant unsaturated polyester resin as claimed in claim 1, which contains from 5 to 45 parts by weight of ammonium polyphosphate per 100 parts by weight of polyester resin.

3. A flame-resistant unsaturated polyester resin as claimed in claim 1 or 2, wherein the ammonium polyphosphate contains from 0.5 to 25% by weight of a water-insoluble, cured or uncured synthetic resin which surrounds the individual ammonium polyphosphate particles.

4. A flame-resistant unsaturated polyester resin as claimed in claim 1 or 2, wherein the ammonium polyphosphate contains from 0.5 to 25% by weight of a product of the reaction of a polyisocyanate with a carbodiimidization catalyst, where the polycarbodiimide surrounds the individual ammonium polyphosphate particles.

5. A flame-resistant unsaturated polyester resin as claimed in claim 1 or 2, wherein the ammonium polyphosphate contains from 0.5 to 25% by weight of a product of the reaction of a polyisocyanate and a polyhydroxyl compound, where the polyurethane formed surrounds the individual ammonium polyphosphate particles.

6. A flame-resistant unsaturated polyester resin as claimed in claim 1 or 2, wherein the ammonium polyphosphate contains from 0.5 to 25% by weight of a product of the reaction of a polyisocyanate and a trimerization catalyst, where the polyisocyanurate formed surrounds the individual ammonium polyphosphate particles.

7. A flame-resistant unsaturated polyester resin as claimed in claim 1 or 2, wherein the ammonium polyphosphate contains from 0.5 to 25% by weight of a product of the reaction of a polyisocyanate and water, where the polyurea formed surrounds the individual ammonium polyphosphate particles.

8. A flame-resistant unsaturated polyester resin as claimed in claim 1 or 2, wherein the ammonium polyphosphate contains from 0.5 to 25% by weight of a cured melamin-formaldehyde resin, where the melamin-formaldehyde resin surrounds the individual ammonium polyphosphate particles.

9. A flame-resistant unsaturated polyester resin as claimed in claim 1 or 2, wherein the ammonium polyphosphate contains from 0.5 to 25% by weight of a cured epoxy resin, where the epoxy resin surrounds the individual ammonium polyphosphate particles.

10. A flame-resistant unsaturated polyester resin as claimed in at least one of claims 1 to 9, which contains from 50 to 175 parts by weight of aluminum hydroxide per 100 parts by weight of polyester resin.

11. A flame-resistant unsaturated polyester resin as claimed in at least one of claims 1 to 10, wherein the organonitrogen compound employed is melamin.

12. A flame-resistant unsaturated polyester resin as claimed in at least one of claims 1 to 10, wherein the organonitrogen compound employed is cyanuric acid and/or isocyanuric acid.

13. A flame-resistant unsaturated polyester resin as claimed in at least one of claims 1 to 10, wherein the organonitrogen compound employed is a product of the condensation of ethyleneurea and formaldehyde.

14. A flame-resistant unsaturated polyester resin as claimed in at least one of claims 1 to 13, wherein from 1 to 25 parts by weight of the organonitrogen compound are present per 100 parts by weight of polyester resin.

15. A flame-resistant unsaturated polyester resin as claimed in at least one of claims 1 to 14, which contains ammonium polyphosphate and the organonitrogen compound in a weight ratio of from 1:1 to 10:1.

16. A flame-resistant unsaturated polyester resin as claimed in at least one of claims 1 to 15, which contains aluminum hydroxide and the combination of ammonium polyphosphate and the organonitrogen compound and/or a derivative thereof in a weight ratio of from 1:1 to 15:1.

17. A flame-resistant unsaturated polyester resin as claimed in at least one of claims 1 to 16, which is reinforced by glass fibers.

**Claims for the following Contracting State : ES**

1. Process for producing flame-resistant unsaturated polyester resins, which comprises a flameproofing system consisting of ammonium polyphosphate, aluminum hydroxide and at least one organonitrogen compound and/or derivatives thereof having been worked in unsaturated polyester resins.

2. Process as claimed in claim 1, wherein the flame-resistant unsaturated polyester resins contain from 5 to 45 parts by weight of ammonium polyphosphate per 100 parts by weight of polyester resins.

3. Process as claimed in claim 1 or 2, wherein the ammonium polyphosphate contains from 0.5 to 25 % by weight of a water-insoluble, cured or uncured synthetic resin which surrounds the individual ammonium polyphosphate particles.

4. Process as claimed in claim 1 or 2, wherein the ammonium polyphosphate contains from 0.5 to 25 % by weight of a product of the reaction of a polyisocyanate with a carbodiimidization catalyst, where the polycarbodiimide surrounds the individual ammonium polyphosphate particles.

5. Process as claimed in claim 1 or 2, wherein the ammonium polyphosphate contains from 0.5 to 25 % by weight of a product of the reaction of a polyisocyanate and a polyhydroxyl compound, where the polyurethane formed surrounds the individual ammonium polyphosphate particles.

6. Process as claimed in claim 1 or 2, wherein the ammonium polyphosphate contains from 0.5 to 25 % by weight of a product of the reaction of a polyisocyanate and a trimerization catalyst, where the polyisocyanurate formed surrounds the individual ammonium polyphosphate particles.

7. Process as claimed in claim 1 or 2, wherein the ammonium polyphosphate contains from 0.5 to 25 % by weight of a product of the reaction of a polyisocyanate and water, where the polyurea formed surrounds the individual ammonium polyphosphate particles.

8. Process as claimed in claim 1 or 2, wherein the ammonium polyphosphate contains from 0.5 to 25 % by weight of a cured melamin-formaldehyde resin, where the melamin-formaldehyde resin surrounds the individual ammonium polyphosphate particles.

9. Process as claimed in claim 1 or 2, wherein the ammonium polyphosphate contains from 0.5 to 25 % by weight of a cured epoxy resin, where the epoxy resin surrounds the individual ammonium polyphosphate particles.

10. Process as claimed in at least one of claims 1 to 9, wherein the flame-resistant unsaturated polyester resins contain from 50 to 175 parts by weight of aluminum hydroxide per 100 parts by weight of polyester resin.

11. Process as claimed in at least one of claims 1 to 10, wherein the organonitrogen compound employed is melamin.

12. Process as claimed in at least one of claims 1 to 10, wherein the organonitrogen compound employed is cyanuric acid and/or isocyanuric acid.

13. Process as claimed in at least one of claims 1 to 10, wherein the organonitrogen compound employed is a product of the condensation of ethyleneurea and formaldehyde.

14. Process as claimed in at least one of claims 1 to 13, wherein the flame-resistant unsaturated polyester resins contain from 1 to 25 parts by weight of the organonitrogen compound per 100 parts by weight of polyester resin.

15. Process as claimed in at least one of claims 1 to 14, wherein the flame-resistant unsaturated polyester resins contain ammonium polyphosphate and the organonitrogen compound in a weight ratio of from 1:1 to 10:1.

16. Process as claimed in at least one of claims 1 to 15, wherein the flame-resistant unsaturated polyester resins contain aluminum hydroxide and the combination of ammonium polyphosphate and the organonitrogen compound and/or derivative thereof in a weight ratio of from 1:1 to 15:1.

17. Process as claimed in at least one of claims 1 to 16, wherein the flame-resistant unsaturated polyester resins are reinforced by glass fibers.

**Revendications**
**Revendications pour les Etats contractants suivants : AT, BE, CH, DE, FR, GB, IT, LI, LU, NL, SE**

1. Résines de polyesters insaturés ignifuges, caractérisées en ce qu'elles contiennent en tant que combinaison ignifugeante du polyphosphate d'ammonium, de l'hydroxyde d'aluminium et au moins un composé organique azoté et/ou un dérivé d'un tel composé.

2. Résines de polyesters insaturés ignifuges selon la revendication 1, caractérisées en ce qu'elles contiennent de 5 à 45 parties en poids de polyphosphate d'ammonium pour 100 parties en poids de la résine polyester.

3. Résines de polyesters insaturés ignifuges selon la revendication 1 ou 2, caractérisées en ce que le polyphosphate d'ammonium contient de 0,5 à 25 % en poids d'une résine synthétique insoluble dans l'eau, éventuellement durcie, qui enrobe les particules individuelles de polyphopshate d'ammonium.

4. Résines de polyesters insaturés ignifuges selon la revendication 1 ou 2, caractérisées en ce que polyphosphate d'ammonium contient de 0,5 à 25 % en poids d'un produit de réaction d'un polyisocyanate et d'un catalyseur de carbodiimidation, le polycarbodiimide enrobant les particules individuelles de polyphosphate d'ammonium.

5. Résines de polyesters insaturés ignifuges selon la revendication 1ou 2, caractérisées en ce que le polyphosphate d'ammonium contient de 0,5 à 25 % en poids d'un produit de réaction d'un polyisocyanate et d'un composé polyhydroxylé, le polyuréthanne formé enrobant les particules individuelles du polyphosphate d'ammonium.

6. Résines de polyesters insaturés ignifuges selon la revendication 1 ou 2, caractérisées en ce que le polyphosphate d'ammonium contient de 0,5 à 25 % en poids d'un produit de réaction d'un polyisocyanate et d'un catalyseur de trimérisation, le polyisocyanurate formé enrobant les particules individuelles de polyphosphate d'ammonium.

7. Résines de polyesters insaturés ignifuges selon la revendication 1 ou 2, caractérisées en ce que le polyphosphate d'ammonium contient de 0,5 à 25 % en poids d'un produit de réaction d'un polyisocyanate et de l'eau, la polyurée formée enrobant les particules individuelles de polyphosphate d'ammonium.

8. Résines de polyesters insaturés ignifuges selon la revendication 1 ou 2, caractérisées en ce que le polyphopshate d'ammonium contient de 0,5 à 25 % en poids d'une résine mélamine/formaldéhyde durcie, laquelle enrobe les particules individuelles de polyphosphate d'ammonium.

9. Résines de polyesters insaturés ignifuges selon la revendication 1 ou 2, caractérisées en ce que le polyphosphate d'ammonium contient de 0,5 à 25 % en poids d'une résine époxydique durcie qui enrobe les particules individuelles de polyphosphate d'ammonium.

10. Résines de polyesters insaturées ignifuges selon les revendications 1 à 9, caractérisées en ce qu'elles contiennent de 50 à 175 parties en poids d'hydroxyde d'aluminium pour 100 parties en poids de la résine de polyester.

11. Résines de polyesters insaturés ignifuges selon au moins une des revendications 1 à 10, caractérisées en ce que l'on utilise la mélamine en tant que composé organique azoté.

**12.** Résines de polyesters insaturés ignifuges selon au moins une des revendications 1 à 10, caractérisées en ce que l'on utilise l'acide cyanurique et/ou l'acide isocyanurique en tant que composés organiques azotés.

**13.** Résines de polyesters insaturés ignifuges selon au moins une des revendications 1 à 10, caractérisées en ce que l'on utilise un produit de condensation de l'éthylène-urée et du formaldéhyde en tant que composé organique azoté.

**14.** Résines de polyesters insaturés ignifuges selon au moins une des revendications 1 à 13, caractérisées en ce qu'elles contiennent de 1 à 25 parties en poids du composé organique azoté pour 100 parties en poids de la résine de polyester.

**15.** Résines de polyesters insaturés ignifuges selon au moins une des revendications 1 à 14, caractérisées en ce qu'elles contiennent le polyphosphate d'ammonium et le composé organique azoté dans des proportions relatives en poids de 1:1 à 10:1.

**16.** Résines de polyesters insaturés ignifuges selon au moins une des revendications 1 à 15, caractérisées en ce qu'elles contiennent l'hydroxyde d'aluminium et la combinaison de polyphosphate d'ammonium et du composé organique azoté et/ou dérivé dans des proportions relatives en poids de 1:1 à 15:1.

**17.** Résines de polyesters insaturés ignifuges selon au moins une des revendications 1 à 16, caractérisées en ce qu'elles sont renforcées par des fibres de verre.

**Revendications pour l'Etat contractant suivant : ES**

**1.** Un procédé pour la production de résines de polyesters insaturés ignifuges, caractérisé en ce qu' on fait incorporer en tant que combinaison ignifugeante dans les résines de polyesters insaturés du polyphosphate d'ammonium, de l'hydroxyde d'aluminium et au moins un composé organique azoté et/ou les dérivés d'un tel composé.

**2.** Un procédé selon la revendication 1, caractérisé en ce que les résines de polyesters insaturés ignifuges contiennent de 5 à 45 parties en masse de polyphosphate d'ammonium pour 100 parties en masse de la résine de polyester.

**3.** Un procédé selon la revendication 1 ou 2, caractérisé en ce que le polyphosphate d'ammonium contient 0,5 à 25 % en masse d'une résine synthétique insoluble dans l'eau, éventuellement durcie, qui enrobe les particules individuelles de polyphosphate d'ammonium.

**4.** Un procédé selon la revendication 1 ou 2, caractérisé en ce que le polyphosphate d'ammonium contient 0,5 à 25 % en masse d'un produit de réaction d'un polyisocyanate et d'un catalyseur de carbodiimidation, le polycarbodiimide enrobant les particules individuelles du polyphosphate d'ammonium.

**5.** Un procédé selon la revendication 1 ou 2, caractérisé en ce que le polyphosphate d' ammonium contient 0,5 à 25 % en masse d'un produit de réaction d'un polyisocyanate et d'un composé polyhydroxylé, le polyuréthanne formé enrobant les particules individuelles du polyphosphate d' ammonium.

**6.** Un procédé selon la revendication 1 ou 2, caractérisé en ce que le polyphosphate d' ammonium contient 0,5 à 25 % en masse d'un produit de réaction d'un polyisocyanate et d'un catalyseur de trimérisation, le polyisocyanurate formé enrobant les particules individuelles du polyphosphate d'ammonium.

**7.** Un procédé selon la revendication 1 ou 2, caractérisé en ce que le polyphosphate d' ammonium contient 0,5 à 25 % en masse d'un produit de réaction d'un polyisocyanate et de l'eau, la polyurée formée enrobant les particules individuelles du polyphosphate d'ammonium.

28

**8.** Un procédé selon la revendication 1 ou 2, caractérisé en ce que le polyphosphate d'ammonium contient 0,5 à 25 % en masse d'une résine mélamine/formaldéhyde durcie, laquelle enrobe les particules individuelles du polyphosphate d'ammonium.

**9.** Un procédé selon la revendications 1 ou 2, caractérisé en ce que le polyphosphate d'ammonium contient 0,5 à 25 % en masse d' une résine époxydique durcie qui enrobe les particules individuelles du polyphosphate d'ammonium.

**10.** Un procédé selon au moins une des revendications 1 à 9, caractérisé en ce que les résines de polyesters insaturées ignifuges contiennent de 50 à 175 parties en masse d'hydroxyde d'aluminium pour 100 parties en masse de la résine de polyester.

**11.** Un procédé selon au moins une des revendications 1 à 10, caractérisé en ce que l'on utilise la mélamine en tant que composé organique azoté.

**12.** Un procédé selon au moins une des revendications 1 à 10, caractérisé en ce que l'on utilise l'acide cyanurique et/ou l'acide isocyanurique en tant que composés organiques azotés.

**13.** Un procédé selon au moins une des revendications 1 à 10, caractérisé en ce que l'on utilise un produit de condensation de l'éthylène-urée et du formaldéhyde en tant que composé organique azoté.

**14.** Un procédé selon au moins une des revendications 1 à 13, caractérisé en ce que les résines de polyesters insaturées ignifuges contiennent de 1 à 25 parties en masse du composé organique azoté pour 100 parties en masse de la résine de polyester.

**15.** Un procédé selon au moins une des revendications 1 à 14, caractérisé en ce que les résines de polyesters insaturées ignifuges contiennent le polyphosphate d'ammonium et le composé organique azoté dans des proportions relatives en masse de 1:1 à 10:1.

**16.** Un procédé selon au moins une des revendications 1 à 15, caractérisé en ce que les résines de polyesters insaturées ignifuges contiennent l'hydroxyde d'aluminium et la combinaison de polyphosphate d'ammonium et du composé organique azoté dans des proportions realtives en masse de 1:1 à 15:1.

**17.** Un procédé selon au moins une des revendications 1 à 16, caractérisé en ce que les résines de polyesters insaturées ignifuges sont renforcées par des fibres de verre.